# EUROPEAN PATENT SPECIFICATION

(11) **EP 2 245 940 B1**
(45) Date of publication and mention of the grant of the patent: **05.06.2013**
(21) Application number: 10160528.5
(22) Date of filing: 21.04.2010
(51) Int. Cl.: A22B 5/16

(54) **Pelting machine**
Enthäutungsmaschine
Machine à dépouiller

(30) Priority: 30.04.2009 FI 20095490
(43) Date of publication of application: 03.11.2010
(73) Proprietor: Oy Norcar-BSB Ab, 66900 Nykarleby (FI)
(72) Inventor: Lindén, Boris, 66900, Nykarleby (FI)
(74) Representative: Niemi, Hakan Henrik

(56) References cited:
- EP-A1- 0 894 437
- US-A- 3 443 275

## Description

### TECHNICAL FIELD

The present invention relates to a pelting machine according to the preamble of claim 1. Such a device is used for removing the skin from a fur animal. The device is particularly suitable for pelting of a bred mink or fox.

### PRIOR ART

A large part of the pelting is still carried out manually. The work is monotonous and tiring. Particularly the arm and hand areas of the person performing the pelting are strained.

Over the years, various devices have been provided with the intention of facilitating the pelting. Thus, for instance a device according to SE 451173, which is intended for pelting of a whole mink, is known. The device facilitates certain stages in removing the fur from an animal body, but using it still requires a lot of manual work and repositioning of the animal body in the device several times. Thus, the work is still laborious and toilsome even if some of the heaviest work stages have been successfully adapted to be performed mechanically.

Patent publication DK 168555 further shows a device which allows the hind legs, anus part and tail of the fur animal to be cut off mechanically. The device does not, however, give a solution for removing the fur from the animal body, which is the heaviest stage of the pelting. Patent publication EP 0894437 discloses a pelting machine as per the preamble of claim 1.

Finally, there is a pelting machine on the market which enables the back part of a fur animal to be cut off, after which the hind legs of the cut animal are fastened to a pulling device which separates the body and the fur by pulling them in opposite directions. The use of the machine still requires a significant amount of manual work to orient the animal body in the machine, fasten the legs and contribute to the separating. The skin must be repositioned and fastened to the pulling device once again to be able to complete the separating. Manual work is further required for making decisive cuts at the ears, eyebrows and nose.

Thus, none of the known solutions has been able to simplify or speed up the practical pelting work to a greater extent. The problem with the present machines is, above all, the extensive manual work that the use still requires.

### PRESENTATION OF THE PROBLEM

With the present invention, the pelting of animals can be made essentially easier and quicker. The invention is thus given the characterizing features presented in claim 1. The subsequent dependent claims present suitable further developments and variations of the invention which further improve its functioning.

In the following description, the terms "upwards", "downwards", "sideways" and so on refer to directions in relation to the pelting machine or its structural details as shown in the attached figures.

The device described in the present invention provides several significant advantages over the prior art. Thus, remarkable saving of work time is achieved in pelting with such a device. It is by no means impossible to up to triplicate the treatment speed in the pelting, compared with devices and combinations on the market today.

A pelting machine according to the present invention provides a significant decrease in manual work stages, which makes the work less laborious for the machine attendant and decreases work-related injuries. At the same time, owing to fewer manual work stages, the quality is improved in the pelting work that is usually very monotonous.

Further advantages and details of the present invention are disclosed in the following description.

### DESCRIPTION OF THE FIGURES

In the following, the invention is described in greater detail with reference to the drawing, where
Figure 1 shows schematically a side view of a particular embodiment of the present pelting machine;
Figures 2 and 3 show a front view of a work stage at a work station I, where the back part of the animal body is opened;
Figures 4 and 5 show a front view of work stages at the work station I, where the skin is detached from the abdomen side of the animal body and the tail is opened;
Figure 6 shows a front view of a work stage at the work station I, where the hind legs are detached from the skin;
Figures 7 and 8 show a side view of a work stage at a work station II, where the primary skin detaching process advances; and
Figure 9 shows a front view of a work stage at a work station III, where the final skin detaching process advances.

### PREFERRED EMBODIMENT

The above-mentioned figures do not show the pelting machine in scale but have only the task of illustrating structural solutions in a preferred embodiment as well as functioning of this embodiment. The structural parts shown in the figures and denoted by reference numerals thus correspond to the structural solutions and the related reference numerals presented in the description below.

What is essential to the present pelting machine 1 is its capability to perform the whole pelting process as a continuous work process. In the present pelting machine, this is implemented by dividing the pelting into four main work stages and work stations where, by turns, opening of the animal body, primary detaching of the skin from the carcass, final detaching of the skin and transfer of the skin and the carcass are carried out.

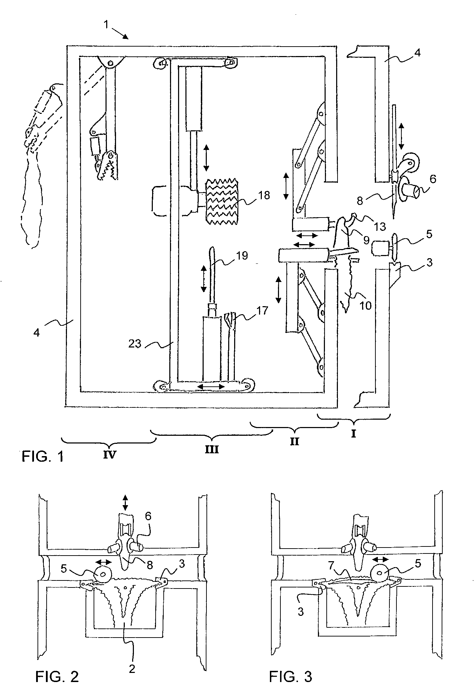

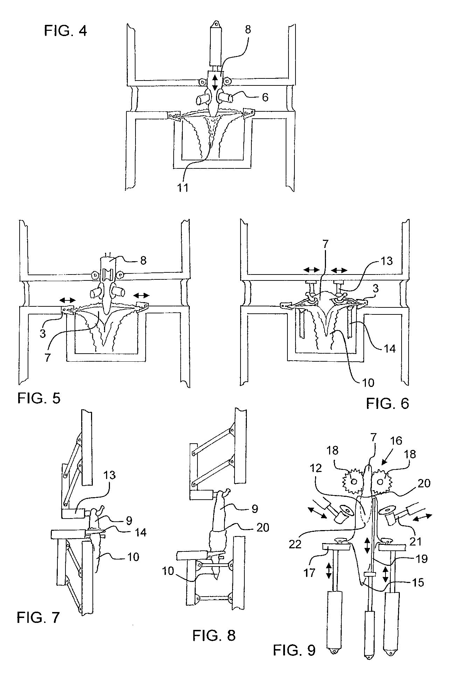

Hence, the pelting is started with an animal body 2 with fur, for example a mink body, usually by cutting, at a first work station I of the pelting machine 1, first the front paws of the animal in a stationary chopping member, which is not particularly shown in the attached drawing, after which the work is continued by fastening the hind legs of the animal to two opposite fastening members 3. These fastening members are arranged to be movable vis-à-vis a frame 4 of the pelting machine, whereby they can be distanced from each other by moving them along a common guide or separate guides of their own in a manner known as such. This movement takes place for instance according to Figure 5 in the right/left direction on the image plane. Fastened to the fastening member 3, the hind legs are thus moved from each other according to Figure 2 to stretch them along a substantially continuous straight line. Subsequently, a movable first knife unit 5 is used for the hind legs to make a cut from the foot of one hind leg to the foot of the opposite hind leg, whereby the cut is positioned at the abdomen side of the animal's anus according to Figures 2 and 3. When the first knife member has been brought into one or the other rest position thereof, a shovel-shaped member 8 is guided into the animal's abdomen through the first cut to detach the carcass 9 from the skin 10 here as well. At the end of this work stage, cuts are made around the animal's anus with one or several second knife units 6, which sink down towards the animal body according to Figure 4. At the same time as the skin is detached from the back part 7 of the animal body 2 in this way, the tail 11 is also opened with a longitudinal cut by a cutting tool while the second knife units and the shovel-shaped member return to their respective rest positions. The animal body is, at this stage, hanging at the first work station I of the pelting machine with its head 12 directed downwards and the hind legs still fastened to the opposite fastening members 3, as shown in Figure 5. The skin 10 has now been partially detached from the back part of the carcass 9, the back part of the abdomen and the tail 11.

Now, at the first work station I, a second work stage follows where gripping members 13 are arranged to be guided between the carcass 9 and the skin 10 at the hips of the hind legs. The gripping members are moved in a substantially horizontal movement which is substantially orthogonal to the path of movement of the first knife unit 5, i.e. on a path which is orthogonal to the image plane in Figure 6, for example. Appropriately in place between the hind legs and the skin 10, the gripping members are arranged to first move outwards from the hip to detach the skin from the hind legs and then to move back inwards to be pressed against the carcass and thereby to grip the hip. The movement thus takes place on the image plane according to Figure 6. At the same time, clamp tools 14 are also arranged to be guided between the carcass and the skin, which has now been detached, at the hips of the hind legs. The clamp tools grip, in turn, the skin 10 at the hips of the hind legs, as shown in Figures 6 and 7, after which the removal of the skin can begin.

Both the gripping members 13 and the clamp tools 14 are arranged to be movable in such a direction from each other that substantially follows the central axis of the hanging carcass on one hand, i.e. in a direction upwards and downwards on the image plane, and in a common direction on the other hand, which is, on the image plane of Figures 1, 7 and 8, presented with a movement to the left, which brings the carcass from the first work station to a second work station II. In an embodiment shown in the attached drawing, the gripping members 13 will thus be moved along both a vertical and a horizontal path. Moving the gripping members and the clamp tools from each other along said vertical path pulls the skin 10 downwards from the back part 7 in a substantially continuous movement, first towards and then over the head 12 of the animal body. At the same time as the clamp tools 14 pull the skin downwards, the gripping members 13 move the back part of the animal body 2 upwards in the pelting machine 1. If allowed by the structure of the pelting machine, it is naturally possible to replace the vertical movement of either the gripping members or the clamp tools by extending the path of movement for the other member or tool. At the end of this second work stage, the animal body 2 is transferred to the second work station II of the pelting machine, and here the lowest edge 15 of the detached skin thus falls below the head 12 of the animal body, while the carcass 9 is still fastened between the gripping members 13 at the hips according to Figure 8.

The pelting now moves over to a third work stage, which means that the gripping members 13 and the clamp tools 14 pass the animal body 2 to a feed device 16 and fixing devices 17 shown in Figures 1 and 9. Hereby, the feed device is guided to the carcass 9 in such a way that transfer members 18, for example cogged rolls according to Figures 1 and 9, comprised therein and positioned opposite each other and oriented substantially vertically surround the carcass from two opposite sides. Transfer members are subsequently guided towards the carcass and grip it while the gripping members 13 loosen their grip and are moved sideways in a direction substantially perpendicular to the direction of travel of the animal body, i.e. in a direction substantially perpendicular to the image plane in Figure 1. At the same time, one or more special fixing devices 17 are guided to grip the skin 10 already removed from the carcass 9, whereby the clamp tools 14 also loosen their grip and are moved, in the same way as the gripping members, sideways in a direction substantially perpendicular to the direction of travel of the animal body. Both the fixing devices 17 and the feed device 16 are arranged to be movable in a common direction to move the animal body 2 onwards from the second work station II to a third consecutive work station III between the gripping members and the clamp tools, which have been moved sideways. At the second or third work station or on its way between these two, also at least one measuring tool 19 is used for the animal body to assess, in the further pelting process, where the border at which the skin is still joined to the carcass, here called the "skin edge" 20, is located. In Figure 9, the animal body is thus seen in this position. The carcass is pressed by the transfer members, and the fixing devices have gripped the skin. The measuring tool is introduced between the skin and the animal body on the right-hand side of the animal body in the figure to extend to the skin edge located in the vicinity of the transfer members.

In the third work station III, the skinless part of the animal body is subsequently fed upwards by the above-described transfer members 18 to move the carcass 9 relative to the skin 10 in this way and to continue the detaching of the skin from the carcass. Simultaneously, the fixing devices 17 may preferably be moved in a downward direction in the pelting machine 1 to accelerate the detachment. When the border where the skin is still joined to the carcass, i.e. the skin edge 20, reaches the ears in this process, an incision tool 21 is used for the border area to detach the ears from the carcass by cutting the muscles and tendons located there. Shortly after that, an incision tool is used for the skin edge to detach the eyebrows from the carcass in the same way, and finally, an incision tool is used for the skin border to detach the nose 22 from the carcass.

To be able to use one or more incision tool 21 for the skin edge 20 at the ears, eyes and nose according to the description above, the detaching process of the skin must be monitored by one or more measuring tools 19, which give the incision tools 21 their necessary activating commands. Such measuring tools may, for example, measure the distance between a peripheral part of the animal body 2, i.e. the back part 7 or the nose 22, and the advancing skin edge 20 where the carcass and the skin are separated from each other to subsequently compare the distance with a database in which critical measurement data have been recorded on the distance between the back part and the ears, the back part and the eye brows, and the back part and the nose, alternatively between the nose and the ears, and the nose and the eyebrows, based on cumulative empirical research information. Minks, in particular, are of substantially the same size with smaller variations for the sexes, owing to which such a database is relatively easy to draw up and maintain.

When the measuring tool 19 notifies that the distances to the ears, the eyes and the nose have been reached, the incision tool 21 performs a predetermined cutting movement which cuts the muscle and the like paths at the ears, eyebrows and nose.

The above measuring tools 19 may be formed of various kinds of optical, mechanical or electromechanical instruments.

Alternatively, these instruments may also be arranged to measure changes in the cross-sectional dimensions of the carcass. When the carcass 9 at the skin edge 20 reaches given predefined dimensions defined in advance, the measuring tools 19 give the necessary activating commands to the incision tool 21. These empirically obtained dimensions may preferably exist in a database in which critical distances based on cumulative research information have been recorded.

In the present preferred embodiment, the measuring tool 19 comprises a spatula preferably arranged on the same transfer frame 23 as the fixing devices 17. The spatula is pushed between the skin 10 hanging downwards and the animal body 2. The spatula is pushed upwards until it meets the inner side of the skin edge 20, where the skin then folds 180 degrees and forms a kind of bottom of a bag. The spatula is thus constructed in such a way that it is easily moved by the skin edge as the skin edge moves during the pelting work. The spatula may also be provided with one or more sensors (not shown) which give a signal when they reach the head 12 of the animal body. Since the location of the ears, eyes and nose may be estimated relative to the skin edge 20, the measuring tool 19 may give necessary activating commands to the incision tools 21. The empirically obtained dimensions required to derive the corresponding location relative to the skin edge may preferably exist in a database in which critical distances based on cumulative research information have been recorded.

In the present preferred embodiment of the pelting machine 1, the work stations I to III are positioned consecutively behind each other, as in the pelting machine illustrated in Figure 1. After the animal body 2 has been placed in the fixing devices 17 and the feed device 16 has been placed at the third work station III, the fixing devices and the work station are preferably moved in a substantially horizontal direction backwards from their initial position to resume the pelting process after that. Such a movement takes place, for example, along guides that extend between the two consecutive work stations II and III.

At the third work station III, one or more incision tools 21 are used according to the present embodiment. The incision tool is arranged to make predefined cuts which, to a required extent, detach the skin 10 and the carcass 9 from each other in the above-described and predefined places. The cuts allow the skin to be detached from the carcass completely mechanically.

Moving the work in completing the pelting to consecutive work stations II to III allows pelting of the following animal body 2 to be started simultaneously at the first work station I. This is something that significantly accelerates the work.

When completely detached from the carcass 9, the skin 10 is transferred at a fourth work station IV for further treatment while the carcass, in turn, is transported for destruction.

The above description and the related figures are only intended to illustrate the present solution for a pelting machine structure. Thus, the solution is not restricted only to the embodiment described above or in the attached claims, but a plurality of variations or alternative embodiments are feasible within the idea described in the attached claims.

Although a pelting machine 1 according to the present embodiment is primarily intended for removing the skin from a mink, there is nothing that prevents the device from also being used in pelting other animals, such as a fox.

## Claims

1. A pelting machine (1), which comprises a frame (4) and a first work station (I) arranged therein and having
two fastening members (3) positioned opposite each other for receiving the hind legs of an animal body (2), the fastening members being arranged to be movable relative to each other and vis-à-vis said frame;
a knife unit (5) movable over the hind legs and arranged to make a first cut from the foot of one hind leg to the foot of the opposite hind leg at the abdomen side of the anus of the animal body (2);
one or more second knife units (6) arranged to make cuts around the anus of the of the animal body (2);
a shovel-shaped member (8) arranged to be guided into the abdomen of the animal body through said first cut;
a cutting tool arranged to open the tail (11) in a longitudinal cut, whereby
the knife unit (6), cutting tool and shovel-shaped member (8) are movable relative to the frame (4);
gripping members (13) movable relative to each other and arranged to remove the animal body's (2) hind legs from its skin (10);
clamp tools (14) to receive the skin detached from the hind legs, which clamp tools are arranged to be movable in a substantially vertical direction; and
a second work station (II) arranged therein and having
a feed device (16) and transfer members (18) comprised therein for receiving the skinless carcass (9), and
fixing devices (17) for receiving the removed edge (15) of the skin (10), **characterized in that**
the fixing devices (17) and the feed device (16) are arranged to be movable relative to the frame (4) to move the animal body (2) to one or more work stations (II, III) arranged on the frame, whereby
the work stations have at least one measuring tool (19) arranged to determine the position of the ears, eyebrows and nose of the animal body; and
one or more incision tools (21) for making cuts in the border area at the ears, eyebrows and nose in such a way that the measuring tool
is arranged to give the incision tools the necessary activating commands for positioning said cuts.

2. A pelting machine (1) according to claim 1, **characterized in that** the measuring tool (19) is arranged to measure the distance between a peripheral part (7, 23) of the animal body (2) and the advancing skin edge (20) where the carcass (9) and the skin (10) are separated from each other.

3. A pelting machine (1) according to claim 1 or 2, **characterized in that** the measuring tool (19) is arranged to measure changes in the cross-sectional dimensions of the carcass (9).

4. A pelting machine (1) according to any one of the preceding claims, **characterized in that** the measuring tool (19) is formed of optical instruments.

5. A pelting machine (1) according to any one of claims 1 to 3, **characterized in that** the measuring tool (19) is formed of mechanical instruments.

6. A pelting machine (1) according to any one of claims 1 to 3, **characterized in that** the measuring tool (19) is formed of electromechanical instruments.

7. A pelting machine (1) according to claim 1, **characterized** d **in that** the measuring tool (19) comprises a spatula arranged to be pushed between the skin (10) and the animal body (2).

8. A pelting machine (1) according to claim 7, **characterized** d **in that** the spatula (19) is provided with one or more sensors, which are arranged to give a signal when they reach the head (12) of the animal body (2).

9. A pelting machine (1) according to claim 7 or 8, **characterized**in **that** the spatula (19) is arranged on the same transfer frame (23) as the fixing devices (17) arranged to grip the skin (10) at the second work station (II).

10. A pelting machine (1) according to any one of the preceding claims, **characterized**in that the pelting after the initial removal of the back part (7) of the animal body is arranged to be moved to the consecutive work stations (II, III) to allow, at the same time, pelting of the following animal body (2) to be started at the first work station (I).

11. A pelting machine (1) according to any one of the preceding claims, **characterized in that** the work stations (I to IV) are arranged consecutively on the frame (4).

## Patentansprüche

1. Enthäutungsmaschine (1), umfassend ein Gestell (4) und eine darin angeordnete erste Arbeitsstation (I) mit:
zwei Halteelementen (3), die einander gegenüberliegend angeordnet sind zur Aufnahme der Hinterläufe eines Tierkörpers (2), wobei die Halteelemente so angeordnet sind, dass sie relativ zueinander und gegenüber dem genannten Gestell bewegbar sind;
einer Messereinheit (5), die über die Hinterläufe bewegbar und derart angeordnet ist, dass sie einen ersten Schnitt von dem Fuß des einen Hinterlaufs zu dem Fuß des gegenüberliegenden Hinterlaufs auf der dem Abdomen zugewandten Seite des Anus des Tierkörpers (2) ausführen kann;
einer oder mehreren zweiten Messereinheiten (6), die angeordnet sind, um Schnitte um den Anus des Tierkörpers (2) herum auszuführen;
einem schaufelförmigen Element (8), vorgesehen und angeordnet, um mittels des genannten ersten Schnitts in den Bauchraum des Tierkörpers hinein geführt zu werden,
einem Schneidwerkzeug, angeordnet, um den Schwanz (11) in einem Längsschnitt zu öffnen,
wobei
die Messereinheit (6), das Schneidwerkzeug und das schaufelförmige Element (8) relativ zu dem Gestell (4) bewegbar sind;
Greifelementen (13), die relativ zueinander bewegbar und angeordnet sind, um die Haut (10) von den Hinterläufen des Tierkörpers (2) zu entfernen;
Klemmwerkzeugen (14) zur Entgegennahme der Haut, die von den Hinterläufen entfernt wurde, wobei diese Klemmwerkzeuge so angeordnet sind, dass sie in einer im wesentlichen vertikalen Richtung bewegbar sind; und
eine zweite darin angeordnete Arbeitsstation (II) mit:
einer Zuführvorrichtung (16) und darin enthaltenen Transferelementen (18) zur Entgegennahme des hautlosen Kadavers (9), und
Befestigungsvorrichtungen (17) zur Entgegennahme des entfernten Randes (15) der Haut (10),
**dadurch gekennzeichnet, dass**
die Befestigungsvorrichtungen (17) und die Zuführvorrichtung (16) so angeordnet sind, dass sie relativ zu dem Gestell (4) bewegbar sind zur Weiterbeförderung des Tierkörpers (2) an eine oder mehrere in dem Gestell angeordnete Arbeitsstationen (II, III), wobei
die Arbeitsstationen mindestens ein Messwerkzeug (19) aufweisen, welches zur Bestimmung der Position der Ohren, der Augenbrauen und der Nase des Tierkörpers vorgesehen ist, und
ein oder mehrere Einschneidewerkzeuge (21), um Schnitte in dem Randbereich an den Ohren, den Augenbrauen und der Nase derart auszuführen, dass das Messwerkzeug so angeordnet ist, dass es dem Einschneidewerkzeug die notwendigen Aktivierungsbefehle für die Positionierung der genannten Schnitte gibt.

2. Enthäutungsmaschine (1) gemäß Anspruch 1, **dadurch gekennzeichnet, dass** das Messwerkzeug (19) derart angeordnet ist, dass es die Entfernung zwischen einem an der Außenseite befindlichen Teil (7, 23) des Tierkörpers (2) und dem sich voran schiebenden Hautrand (20) an der Stelle messen kann, wo der Kadaver (9) und die Haut (10) voneinander getrennt sind.

3. Enthäutungsmaschine (1) gemäß Anspruch 1 oder 2, **dadurch gekennzeichnet, dass** das Messwerkzeug (19) derart angeordnet ist, um Änderungen der Querschnittsabmessungen des Kadavers (9) zu messen.

4. Enthäutungsmaschine (1) gemäß einem der vorangehenden Ansprüche, **dadurch gekennzeichnet, dass** das Messwerkzeug (19) aus optischen Geräten gebildet wird.

5. Enthäutungsmaschine (1) gemäß einem der Ansprüche 1 bis 3, **dadurch gekennzeichnet, dass** das Messwerkzeug (19) aus mechanischen Geräten gebildet wird.

6. Enthäutungsmaschine (1) gemäß einem der Ansprüche 1 bis 3, **dadurch gekennzeichnet, dass** das Messwerkzeug (19) von elektromechanischen Geräten gebildet wird.

7. Enthäutungsmaschine (1) gemäß Anspruch 1, **dadurch gekennzeichnet, dass** das Messwerkzeug (19) ein Spatelmesser umfasst, angeordnet, um zwischen die Haut (10) und den Tierkörper (2) geschoben zu werden.

8. Enthäutungsmaschine (1) gemäß Anspruch 7, **dadurch gekennzeichnet, dass** das Spatelmesser (19) mit einem oder mehreren Sensoren ausgestattet ist, die vorgesehen sind, um ein Signal zu generieren, wenn sie den Kopf (12) des Tierkörpers (2) erreichen.

9. Enthäutungsmaschine (1) gemäß Anspruch 7 oder 8, **dadurch gekennzeichnet, dass** das Spatelmesser (19) auf dem selben Transfergestell (23) angeordnet ist wie die Befestigungsvorrichtungen (17), welche vorgesehen sind, um die Haut (10) an der zweiten Arbeitsstation (II) zu ergreifen.

10. Enthäutungsmaschine (1) gemäß einem der vorhergehenden Ansprüche, **dadurch gekennzeichnet, dass** die Enthäutungsmaschine nach der ersten Entfernung des hinteren Teils (7) des Tierkörpers so angeordnet ist, dass sie zu den nachfolgenden Arbeitsstationen (II, III) bewegt werden kann, um gleichzeitig den Beginn der Enthäutung des nachfolgenden Tierkörpers (2) an der ersten Arbeitsstation (I) zu gestatten.

11. Enthäutungsmaschine (1) gemäß einem der vorhergehenden Ansprüche, **dadurch gekennzeichnet, dass** die Arbeitsstationen (I bis IV) hintereinander auf dem Gestell (4) angeordnet sind.

## Revendications

1. Machine à dépouiller (1), qui comprend un châssis (4) et un premier poste de travail (I) agencé en son sein et ayant
deux éléments d'attache (3) positionnés à l'opposé l'un de l'autre pour recevoir les pattes arrière d'un corps animal (2), les éléments d'attache étant agencés pour être mobiles l'un par rapport à l'autre et vis-à-vis dudit châssis ;
une unité formant couteau (5) mobile au-dessus des pattes arrière et agencée pour réaliser une première coupe allant de l'extrémité inférieure d'une patte arrière à l'extrémité inférieure de la patte arrière opposée au niveau du côté abdomen de l'anus du corps animal (2) ;
une ou plusieurs secondes unités formant couteaux (6) agencées pour réaliser des coupes autour de l'anus du corps animal (2) ;
un élément en forme de pelle (8) agencé pour être guidé dans l'abdomen du corps animal à travers ladite première coupe ;
un outil de coupe agencé pour ouvrir la queue (11) dans une découpe longitudinale, de sorte que
l'unité formant couteau (6), l'outil de coupe et l'élément en forme de pelle (8) sont mobiles par rapport au châssis (4) ;
des éléments de prise (13) mobiles les uns par rapport aux autres et agencés pour enlever les pattes arrière du corps animal (2) de sa peau (10) ;
des outils à pince (14) pour recevoir la peau détachée des pattes arrière, lesquels outils à pince sont agencés pour être mobiles dans une direction sensiblement verticale ; et
un deuxième poste de travail (II) agencé en son sein et ayant
un dispositif d'amenée (16) et des éléments de transfert (18) compris en son sein pour recevoir la carcasse écorchée (9), et
des dispositifs de fixation (17) pour recevoir le bord enlevé (15) de la peau (10), **caractérisée en ce que**
les dispositifs de fixation (17) et le dispositif d'amenée (16) sont agencés pour être mobiles par rapport au châssis (4) pour déplacer le corps animal (2) vers un ou plusieurs postes de travail (II, III) agencés sur le châssis, de sorte que
les postes de travail ont au moins un outil de mesure (19) agencé pour déterminer la position des oreilles, des sourcils et du museau du corps animal ; et
un ou plusieurs outils d'incision (21) pour réaliser des coupes dans la zone limitrophe aux oreilles, aux sourcils et au museau de telle façon que l'outil de mesure est agencé pour donner les commandes d'activation nécessaires aux outils d'incision pour positionner lesdites coupes.

2. Machine à dépouiller (1) selon la revendication 1, **caractérisée en ce que** l'outil de mesure (19) est agencé pour mesurer la distance entre une partie périphérique (7, 23) du corps animal (2) et le bord de peau en saillie (20) où la carcasse (9) et la peau (10) sont séparées l'une de l'autre.

3. Machine à dépouiller (1) selon la revendication 1 ou 2, **caractérisée en ce que** l'outil de mesure (19) est agencé pour mesurer des changements des dimensions en section transversale de la carcasse (9).

4. Machine à dépouiller (1) selon l'une quelconque des revendications précédentes, **caractérisée en ce que** l'outil de mesure (19) est formé d'instruments optiques.

5. Machine à dépouiller (1) selon l'une quelconque des revendications 1 à 3, **caractérisée en ce que** l'outil de mesure (19) est formé d'instruments mécaniques.

6. Machine à dépouiller (1) selon l'une quelconque des revendications 1 à 3, **caractérisée en ce que** l'outil de mesure (19) est formé d'instruments électromécaniques.

7. Machine à dépouiller (1) selon la revendication 1, **caractérisée en ce que** l'outil de mesure (19) comprend une spatule agencée pour être poussée entre la peau (10) et le corps animal (2).

8. Machine à dépouiller (1) selon la revendication 7, **caractérisée en ce que** la spatule (19) est munie d'un ou plusieurs capteurs, qui sont agencés pour donner un signal quand ils atteignent la tête (12) du corps animal (2).

9. Machine à dépouiller (1) selon la revendication 7 ou 8, **caractérisée en ce que** la spatule (19) est agencée sur le même châssis de transfert (23) que les dispositifs de fixation (17) agencés pour saisir la peau (10) au niveau du deuxième poste de travail (II).

10. Machine à dépouiller (1) selon l'une quelconque des revendications précédentes, **caractérisée en ce que** la dépouille après l'enlèvement initial de la partie arrière (7) du corps animal est agencée pour être déplacée vers les postes de travail consécutifs (II, III) pour permettre, en même temps, de commencer la dépouille du corps animal suivant (2) au niveau du premier poste de travail (I).

11. Machine à dépouiller (1) selon l'une quelconque des revendications précédentes, **caractérisée en ce que** les postes de travail (I à IV) sont agencés de manière consécutive sur le châssis (4).
